# EUROPÄISCHE PATENTANMELDUNG

(11) **EP 4 510 640 A1**
(43) Veröffentlichungstag der Anmeldung: **19.02.2025**
(21) Anmeldenummer: 24183007.4
(22) Anmeldetag: 19.06.2024
(51) Int. Cl.: H04W 4/02, H04W 4/38, H04L 67/52, H04W 4/80, G01S 5/02, G06F 1/16, H04W 4/029, H04W 4/33, G06F 3/048, G06F 3/01

(54) **GERÄT, VORZUGSWEISE HAUSHALTSGERÄT**

(30) Priorität: 14.07.2023 BE 202305593
(71) Anmelder: Miele & Cie. KG, 33332 Gütersloh (DE)
(72) Erfinder: Schmull, Jan, 33649 Bielefeld (DE); Carsten, Daniel, 33615 Bielefeld (DE); Spenst, Natalie, 33335 Gütersloh (DE); Leier, Alexander, 33378 Rheda-Wiedenbrück (DE); Stankovic, Marco, 337378 Rheda-Wiedenbrück (DE)

(57) **Zusammenfassung**

Die Erfindung betrifft ein Gerät (1; 2; 3), vorzugsweise ein Haushaltsgerät (1; 2; 3). Das Gerät (1; 2; 3) ist gekennzeichnet durch ein UWB-Modul (14; 24; 34), welches ausgebildet und eingerichtet ist, eine zumindest einseitige, vorzugsweise beidseitige, UWB-Kommunikation mit einem UWB-fähigen mobilen Endgerät (4) eines Benutzers (5) auszuführen, wobei das Gerät (1; 2; 3), vorzugsweise das UWB-Modul (14; 24; 34) und/oder eine Steuerungseinheit des Geräts (1; 2; 3), ferner ausgebildet und eingerichtet ist, das UWB-fähige mobile Endgerät (4) zu orten, wobei das Gerät (1; 2; 3), vorzugsweise das UWB-Modul (14; 24; 34) und/oder die Steuerungseinheit des Geräts (1; 2; 3), eine Information hinsichtlich der relativen Position des UWB-fähigen mobilen Endgeräts (4) am Körper des Benutzers (5) aufweist.

## Beschreibung

Die Erfindung betrifft ein Gerät, vorzugsweise ein Haushaltsgerät.

Zur Ausführung von bzw. zur Unterstützung bei Haushaltstätigkeiten wie beispielsweise dem Waschen, dem Trocknen, dem Reinigen wie beispielsweise dem Wischen oder Staubsaugen und dergleichen sind seit langem Haushaltsgeräte wie beispielsweise Waschmaschinen, Wäschetrockner, Waschtrockner, Nasssauger, Staubsauger und dergleichen bekannt. Dies gilt ebenso für die Küchengeräte, welche ebenfalls zu den Haushaltsgeräten zählen. So kann sich ein Benutzer beispielsweise durch ein Handrührgerät, einen Pürierstab, einen Wasserkocher und insbesondere durch Gargeräte wie beispielsweise einen Backofen, einen Dampfgarer, ein Kombigerät aus Backofen und Dampfgarer, eine Mikrowelle und dergleichen bei der Zubereitung von Speisen unterstützen lassen. Zu den Küchengeräten sind ferner beispielsweise Dunstabzugshauben, Geschirrspüler, Kühlschränke, Gefrierschränke, Gefriertruhen und dergleichen zu zählen.

Einige Haushaltsgeräte wie beispielsweise Staubsauger und Handrührgeräte werden bei Gebrauch vom Benutzer mit der Hand geführt und bewegt und sind somit als mobil verwendbar anzusehen. Andere bzw. die meisten Haushaltsgeräte wie beispielsweise Waschmaschinen, Wäschetrockner, Backöfen, Dampfgarer, Kühlschränke und dergleichen werden aufgrund ihres Verwendungszwecks aber auch aufgrund ihrer Größe und ihres Gewichts an einem bestimmten Ort im Haushalt bzw. in der Küche oder im Vorratsraum aufgestellt und verwendet und sind somit als stationär verwendbar anzusehen.

Derartige stationär verwendbare Haushaltsgeräte haben üblicherweise gemeinsam, dass sie ein äußeres Gehäuse als Außengehäuse aufweisen, welches das Haushaltsgerät nach außen im Wesentlichen umschließt und dessen einzelnen Bauteile und Elemente schützt sowie gemeinsam handhabbar macht. Innerhalb des Haushaltsgeräts wird ein Innenraum ausgebildet, welcher den Behandlungsraum darstellt und im Wesentlichen von einem inneren Gehäuse als Innengehäuse umschlossen wird. Zwischen dem Innengehäuse und dem Außengehäuse wird ein Gehäuseraum als Zwischenraum gebildet, in welchem Funktionselemente des Haushaltsgeräts wie zum Beispiel eine Steuerung bzw. eine Steuerungseinheit, eine elektrische Energieversorgung und sonstige Bauelemente angeordnet sein können, welche dem bestimmungsgemäßen Gebrauch des Haushaltsgeräts dienen. In der Tiefe von vorne, d.h. aus Sicht eines Benutzers betrachtet, schließt das Außengehäuse bzw. eine Blende in Form eines Möbelmaterials oder in Form einer Bedienblende und dergleichen mit dem Innengehäuse zusammen den Gehäuseraum ab, so dass der Gehäuseraum für den Benutzer nicht zugänglich ist.

Der Innenraum des Haushaltsgeräts weist in der Tiefe nach vorne eine Durchgangsöffnung als Zugangsöffnung auf, durch welche hindurch der Innenraum des Haushaltsgeräts für den Benutzer zugänglich ist, um zu behandelndes Gut wie beispielsweise zu waschende oder zu trocknende Wäsche, zu garende oder zu kühlende Lebensmittel oder dergleichen in den Innenraum des Haushaltsgeräts einzuführen und dort anzuordnen sowie nach erfolgter Behandlung aus dem Innenraum des Haushaltsgeräts zu entnehmen und von dort zu entfernen. Die Zugangsöffnung kann mittels eines Verschlusselements zum Beispiel in Form einer seitlich schwenkbaren Tür, einer nach unten schwenkbaren Klappe und dergleichen vom Benutzer geöffnet werden, um auf den Innenraum des Haushaltsgeräts zugreifen zu können, wie zuvor beschrieben, oder um den Innenraum des Haushaltsgeräts zu verschließen und den Behandlungsvorgang auszuführen. Ein derartiges Verschlusselement kann geschlossen ausgebildet sein oder ein Sichtfenster aufweisen, um dem Benutzer beispielsweise bei einer Waschmaschine oder bei einem Backofen einen Einblick in den geschlossenen Innenraum des Haushaltsgeräts zu ermöglichen.

Bei Haushaltsgeräten ist es mittlerweile bekannt, dass versucht wird, einen Benutzer überhaupt und insbesondere einen konkreten Benutzer seitens des Haushaltsgeräts zu erkennen, d.h. mehrere Personen voneinander zu unterscheiden. Hierdurch soll der Komfort der Bedienung des Haushaltsgeräts für die Person als Benutzer gesteigert werden, indem bestimmte Funktionen bzw. Betriebszustände des Haushaltsgeräts in Abhängigkeit der Anwesenheit oder Abwesenheit des Benutzers bzw. eines bestimmten Benutzers aktiviert bzw. zur Verfügung gestellt werden können oder nicht. Beispielsweise kann ein "Aufwachen" aus einem Stand-By-Modus in einen Betriebsmodus erfolgen, sobald eine Person überhaupt vom Haushaltsgerät, beispielsweise im Bereich unmittelbar vor dem Haushaltsgerät, erkannt wird.

Es ist bekannt, für diesen Weg der Benutzererkennung eine Bilderfassung bzw. ein Kamerasystem zu verwenden, welches dem Benutzer bzw. dem Bereich vor dem Haushaltsgerät zugewandt in dem Haushaltsgerät integriert ist. Insbesondere kann die Bilderfassungseinheit bzw. die Kamera hierzu in einer Blende des Haushaltsgeräts angeordnet werden. Als Bilderfassungseinheit bzw. als Kamera können beispielsweise 2D-Kameras, 3D-Kameras, Stereokameras oder Time-of-Flight-Kameras verwendet werden.

Über ein Kamerasystem kann zwar der Nutzer bzw. der Benutzer und teilweise seine Absicht, beispielsweise die Absicht der Nutzung des Haushaltsgeräts durch die Annäherung des Benutzers an das Haushaltsgerät, erkannt werden.

Nachteilig ist hierbei jedoch, dass dies lediglich in einem bestimmten Field-of-View, also innerhalb der Detektionsreichweite des optischen Systems, erfolgen kann, welches sich üblicherweise nur im Bereich unmittelbar vor dem Haushaltsgerät bzw. dessen Blende befindet. Hält sich der Benutzer außerhalb der Detektionsreichweite bzw. außerhalb des Sichtfeldes der Bilderfassung bzw. des Kamerasystems auf, so kann diese Funktion des Haushaltsgeräts nicht verwendet werden.

Nachteilig ist auch, dass eine Benutzererkennung eine hierfür ausreichend hohe Auflösung der Bilderfassungseinheit bzw. des Kamerasystems erfordert. Eine entsprechende Bilderfassungseinheit kann zu hohen Anschaffungskosten führen sowie einen großen Bauraum erfordern, welcher insbesondere im Bereich hinter der Blende des Haushaltsgeräts begrenzt sein kann. Auch kann die Verarbeitung der erfassten Bilddaten zu einem entsprechend hohen Aufwand seitens der Steuerungseinheit der Bilderfassung bzw. des Kamerasystems oder der Steuerungseinheit des Haushaltsgeräts führen, was ebenfalls zu entsprechenden Anschaffungskosten führen kann. In jedem Fall kann dies auch den Verbrauch an elektrischer Energie erhöhen.

Ausgehend von diesem Stand der Technik wäre es wünschenswert, bei Haushaltsgeräten die Möglichkeiten zur Erkennung von Personen bzw. von Benutzern, insbesondere deren Unterscheidung, zu verbessern. Insbesondere könnte die Möglichkeit zur Ortung bzw. zur Positionsbestimmung der Person bzw. des Benutzers verbessert werden.

Würde hierzu seitens des Haushaltsgeräts ein UWB-Modul verwendet werden, um eine UWB-Kommunikation mit einem UWB-fähigen mobilen Endgerät eines Benutzers auszuführen und das UWB-fähige mobile Endgerät relativ zum Haushaltsgerät zu orten, könnte dies zwar die o.g. Möglichkeiten verbessern.

Nachteilig hierbei wäre jedoch, dass der Benutzer des UWB-fähigen mobilen Endgeräts nur grob bzw. ungefähr geortet werden könnte, da tatsächlich das UWB-fähige mobile Endgerät, welches vom Benutzer bei sich bzw. an sich getragen wird, geortet werden würde und nicht der Benutzer selbst im Sinne seiner Körpermitte. Anders formuliert würde eher das rechte oder linke Handgelenk eines Benutzers geortet werden, falls das UWB-fähige mobile Endgerät eine Smartwatch wäre, als die Körpermitte des Benutzers als Träger der Smartwatch.

Dies kann dahingehend zu Problemen bei der Ortung bzw. bei der Positionsbestimmung des Benutzers relativ zum Haushaltsgerät führen, falls der Benutzer vor zwei derartigen Haushaltsgeräten steht, da es in diesem Fall einen Unterschied machen kann, ob der Benutzer als Träger der Smartwatch am linken Handgelenk, vom Haushaltsgerät aus betrachtet, richtigerweise links von der Smartwatch oder fälschlicherweise rechts von der Smartwatch erkannt wird. Dies gilt entsprechend für den Benutzer als Träger der Smartwatch am rechten Handgelenk. Dies gilt ebenso für andere UWB-fähige mobile Endgeräte, welche an bzw. in einer Hand oder auch in einer Hosentasche vom Benutzer getragen werden.

In diesem Fall kann es somit dazu kommen, dass der Benutzer als Träger einer Smartwatch am linken Handgelenk und als Rechtshänder nicht mittig, sondern nach links versetzt vor dem rechten Haushaltsgerät steht, um das rechte Haushaltsgerät zu nutzen. Hierdurch kann die Smartwatch am linken Handgelenk dem linken Haushaltsgerät, welches in diesem Moment gar nicht betrieben werden soll, näher als dem rechten Haushaltsgerät sein. Führen beide Haushaltsgeräte nun eine Ortung der Smartwatch durch, so können beide Haushaltsgeräte aktiviert werden oder sogar lediglich das linke Haushaltsgerät, welches die Smartwatch näher ist, so dass eine Nutzung des rechten Haushaltsgeräts basierend auf der UWB-Kommunikation, beispielsweise eine Aktivierung bei Annäherung eines erkannten Benutzers mittels seiner Smartwatch, gar nicht möglich ist. Dies kann die Nutzung dieser Möglichkeiten verhindern und den Benutzer verärgern, insbesondere bei versehentlicher Aktivierung eines anderen, "falschen" Haushaltsgeräts.

Vergleichbare Überlegungen gelten auch für sonstige Geräte wie beispielsweise Serviceroboter.

Zusätzlich oder alternativ ist zu bedenken, dass viele Geräte und damit auch Haushaltsgeräte ergonomisch auf die Bedienung durch Rechtshänder, d.h. durch rechtshändige Benutzer, ausgelegt bzw. optimiert sind. Dies kann die Benutzung für Linkshänder erschweren.

Der Erfindung stellt sich das Problem, bei Geräten, insbesondere bei Haushaltsgeräten, die Möglichkeit zur Ortung bzw. zur Positionsbestimmung einer Person bzw. eines Benutzers mittels eines UWB-fähigen mobilen Endgeräts zu verbessern. Insbesondere soll die Ortung bzw. die Positionsbestimmung der Person bzw. des Benutzers relativ zur Ortung bzw. zur Positionsbestimmung des UWB-fähigen mobilen Endgeräts ermöglicht werden. Zusätzlich oder alternativ soll anhand des UWB-fähigen mobilen Endgeräts eine Erkennung der Bedienhand des Benutzers erfolgen können. In jedem Fall soll dies möglichst einfach, kostengünstig, zuverlässig und bzw. oder energieeffizient erfolgen. Zumindest soll eine Alternative zu den bekannten Möglichkeiten geschaffen werden.

Erfindungsgemäß wird dieses Problem durch ein Gerät mit den Merkmalen des Anspruchs 1 gelöst. Vorteilhafte Ausgestaltungen und Weiterbildungen der Erfindung ergeben sich aus den nachfolgenden abhängigen Ansprüchen.

Somit betrifft die Erfindung ein Gerät. Das Gerät kann vorzugsweise ein Haushaltsgerät sein. Das Haushaltsgerät kann ein jegliches Haushaltsgerät und insbesondere ein jegliches Küchengerät sei. Insbesondere kann das Haushaltsgerät ein stationäres Haushaltsgerät und insbesondere ein Einbauhaushaltsgerät sein. Beispielsweise kann das stationäre Haushaltsgerät eine Waschmaschine, ein Trockner, ein Kühlschrank, ein Kochfeld, ein Backofen, ein Dampfgarer und dergleichen sein. Das Gerät kann aber auch jegliches andere Gerät wie beispielsweise ein Serviceroboter sein.

In jedem Fall ist das erfindungsgemäße Gerät gekennzeichnet durch ein UWB-Modul, welches ausgebildet und eingerichtet ist, eine zumindest einseitige, vorzugsweise beidseitige, UWB-Kommunikation mit einem UWB-fähigen mobilen Endgerät eines Benutzers auszuführen, wobei das Gerät, vorzugsweise das UWB-Modul und bzw. oder eine Steuerungseinheit des Geräts, ferner ausgebildet und eingerichtet ist, das UWB-fähige mobile Endgerät zu orten. Dies kann es ermöglichen, die Position des UWB-fähigen mobilen Endgeräts relativ zum Haushaltsgerät, insbesondere den Abstand und bzw. oder die Orientierung des UWB-fähigen mobilen Endgeräts relativ zum Haushaltsgerät, zu verwenden bzw. zu berücksichtigen, um das Haushaltsgerät zu betreiben, wie weiter unten noch näher beschrieben werden wird.

Insbesondere können Funktionen bzw. der Betrieb des Haushaltsgeräts als Ganzes von der Nähe des UWB-fähigen mobilen Endgeräts abhängig gemacht werden. Hierdurch kann insbesondere eine Fernwirkung, d.h. ein Betrieb bzw. eine Beeinflussung des Betriebs des Haushaltsgeräts mittels des UWB-fähigen mobilen Endgeräts ohne dessen ausreichende Nähe und damit ohne die vermeintliche Anwesenheit des entsprechenden Benutzers, ausgeschlossen werden, was die Sicherheit des Haushaltsgeräts erhöhen kann.

Erfindungsgemäß können somit die Eigenschaften der UWB-Technologie genutzt werden, um den Benutzer, welcher das UWB-fähige mobile Endgerät bei bzw. an sich trägt bzw. benutzt, grundsätzlich zu orten. Dies kann die Nutzungsmöglichkeiten des Haushaltsgeräts verbessern bzw. erweitern, wie nachfolgend näher beschrieben werden wird.

UWB steht für Ultra Wideband und beschreibt die Verwendung eines breitbandigen, min. 500 MHz breiten, Funksignals in einem Frequenzbereich von 3,1 GHz bis 10,6 GHz. Die erzeugten Funksignale liegen zeitlich im Nanosekundenbereich. Daher lassen sich hohe Datenraten erzeugen, aber auch Laufzeitmessungen vornehmen, wodurch präzise Abstandsmessungen zwischen zwei UWB-Teilnehmern kleiner 10 cm möglich sind und je nach Antennendesign bzw. bei Verwendung mehrerer Antennen über einen Laufzeitunterschied auch Richtungen der Funksignale mit Genauigkeiten um die 3° bestimmt werden können. Typische Messverfahren sind hier das Two Way Ranging und die PDoA (Phasendifferenz der angekommenen Signale).

Als technische Basis kann auf IEEE802.15.4z gesetzt werden. Es handelt sich um ein Funkprotokoll für UWB-Kommunikation, das nur eine geringe spektrale Leistung verwenden darf. Über die geringe spektrale Leistung ist es reichweitenreduziert. Durch die hohe Bandbreite (500 MHz) sind sehr kurze Pulse möglich, die für genaue Laufzeitmessungen verwendet werden können.

Das mobile Endgerät kann ein Wearable und insbesondere ein Smartphone, eine Smartwatch oder ein Tablet sein. Unter einem "Wearable", auch "Wearable Computers" genannt, werden elektronische Geräte wie beispielsweise eine Smartwatch, eine Datenbrille oder dergleichen verstanden, welche im Gebrauch vom Benutzer am Körper getragen werden. Hierzu können Wearables auch in die Kleidung inklusiver der Schuhe integriert sein. Auch bei Wearables können die o.g. drahtlosen Kommunikationsstandarts verwendet werden.

Wearables können insbesondere zum einen der mobilen Datenverarbeitung dienen. Zum anderen werden Wearables aber im Wesentlichen dazu verwendet, die Person als Träger bzw. als Benutzer des Wearables auffindbar bzw. verfolgbar zu machen, was als Tracking bezeichnet werden kann. Beim Tracking können Informationen über den Benutzer gesammelt und drahtlos an andere elektronische Geräte bzw. an ein elektrisches Netzwerk übertragen werden, welche die Position der Person in einem Raum und insbesondere gegenüber einem Gerät aufweisen. Es können zusätzlich oder alternativ aber auch Informationen auf diese Art und Weise übertragen werden, welche die Aktivitäten bzw. Tätigkeiten der Person und bzw. oder dessen physiologischen Zustand wie beispielsweise die Körpertemperatur, die Herzfrequenz und dergleichen betreffen. Auch können Wearables untereinander interagieren bzw. kommunizieren, um beispielsweise Personen bzw. dessen Wearables untereinander zu identifizieren und dergleichen.

Erfindungsgemäß weist das Gerät, vorzugsweise das UWB-Modul und bzw. oder die Steuerungseinheit des Geräts, eine Information hinsichtlich der relativen Position des UWB-fähigen mobilen Endgeräts am Körper des Benutzers auf. Mit anderen Worten liegt dem Gerät eine Information vor, wo am Körper der Benutzer das UWB-fähige mobile Endgerät tatsächlich trägt. Somit kann aus der Ortung der Position des UWB-fähigen mobilen Endgeräts auf die genaue bzw. auf die tatsächliche Position des Benutzers bzw. dessen Körperschwerpunkt bzw. Körpermittelpunkt geschlossen werden, um den Benutzer genauer als bisher bekannt mittels einer UWB-Kommunikation seines UWB-fähigen mobilen Endgeräts zu orten.

Dies kann insbesondere nützlich sein, falls sich der Benutzer mit seinem UWB-fähigen mobilen Endgerät vor zwei erfindungsgemäßen Geräten aufhält, insbesondere etwa mittig zwischen den beiden Geräten.

Gemäß einem Aspekt der Erfindung ist die Information hinsichtlich der relativen Position des UWB-fähigen mobilen Endgeräts am Körper des Benutzers die Art des UWB-fähigen mobilen Endgeräts. Dies kann beispielsweise die Unterscheidung zwischen einer Smartwatch, welche an einem der beiden Handgelenke des Benutzers getragen wird, und Smart Glasses, welche auf der Nase oder um den Hals des Benutzers getragen werden, ermöglichen.

Gemäß einem weiteren Aspekt der Erfindung ist die Information hinsichtlich der relativen Position des UWB-fähigen mobilen Endgeräts am Körper des Benutzers der Trageort des UWB-fähigen mobilen Endgeräts am Körper des Benutzers. Dies kann beispielsweise der Hinweis auf eine der Hände oder Handgelenke des Benutzers sein, wo der Benutzer eine Smartwatch oder einen Smartring tragen kann, im Unterschied zu den Hosentaschen des Benutzers, wo sein Smartphone oder ein Smart Tag getragen werden kann.

Gemäß einem weiteren Aspekt der Erfindung ist die Information hinsichtlich der relativen Position des UWB-fähigen mobilen Endgeräts am Körper des Benutzers die Händigkeit des Benutzers. Dies kann beispielsweise die Konkretisierung einer Smartwatch ermöglichen, da Uhren üblicherweise an derjenigen Hand getragen werden, welche nicht die dominante Hand des Benutzers ist. Die Information der Händigkeit kann auch sonstig verwendet werden. Erfindungsgemäß ist zu beachten, dass "Händigkeit" hier nicht zwangsläufig Rechts- bzw. Linkshändigkeit bedeuten muss, wenn auch kann. Im Kontext der Erfindung ist unter "Händigkeit" allgemeiner zu verstehen, dass die üblicherweise von einem bestimmten Benutzer für eine bestimmte Bedienhandlung verwendete Hand gemeint ist.

Gemäß einem weiteren Aspekt der Erfindung weist das Gerät ferner wenigstens eine Bedieneinheit auf, welche ausgebildet ist, wenigstens ein Bedienelement an wenigstens zwei unterschiedlichen Positionen anzuzeigen, wobei das Gerät, vorzugsweise die Bedieneinheit und bzw. oder die Steuerungseinheit des Geräts, ausgebildet und eingerichtet ist, das Bedienelement in Abhängigkeit der Händigkeit des Benutzers an einer der beiden Positionen anzuzeigen. Dies kann eine mögliche Nutzung der Information der Händigkeit des Benutzers darstellen, um ihm die Bedienung des Bedienelements gemäß seiner Händigkeit zu ermöglichen, was den Bedienkomfort für den Benutzer erhöhen kann.

Gemäß einem weiteren Aspekt der Erfindung ist die Information hinsichtlich der relativen Position des UWB-fähigen mobilen Endgeräts am Körper des Benutzers die Körpergröße des Benutzers. Dies kann die Zuordnung von Smart Glasses relativ zur Person bzw. umgekehrt entlang der vertikalen Achse ermöglichen.

Gemäß einem weiteren Aspekt der Erfindung ist die Information hinsichtlich der relativen Position des UWB-fähigen mobilen Endgeräts am Körper des Benutzers eine kalibrierte relative Position des Benutzers. Unter einer derartigen Kalibrierung ist ein Anlernen bzw. ein Vorgeben der relativen Position des UWB-fähigen mobilen Endgeräts am Körper des Benutzers basierend auf Handlungen des Benutzers zu verstehen, welche der Benutzer am Gerät ausführt und welche erfasst, verarbeitet und gespeichert werden, während der Benutzer sein UWB-fähiges mobiles Endgerät an den entsprechenden Positionen seines Körpers trägt bzw. hält. Dies kann eine sehr genaue und bzw. oder individuelle Vorgabe der relativen Position ermöglichen.

Gemäß einem weiteren Aspekt der Erfindung weist das Gerät eine Bilderfassungseinheit auf, welche ausgebildet und eingerichtet ist, einen Detektionsbereich vor dem Gerät sensorisch zu erfassen, wobei das Gerät, vorzugsweise die Bilderfassungseinheit und bzw. oder die Steuerungseinheit des Geräts, ausgebildet und eingerichtet ist, die relative Position des UWB-fähigen mobilen Endgeräts am Körper des Benutzers zu erkennen und als Information hinsichtlich der relativen Position des UWB-fähigen mobilen Endgeräts am Körper des Benutzers zu verwenden und bzw. oder zu speichern. Dies kann eine Möglichkeit darstellen, die relative Position des UWB-fähigen mobilen Endgeräts am Körper des Benutzers seitens des Geräts zu erkennen und zu verwenden bzw. zu speichern.

Gemäß einem weiteren Aspekt der Erfindung wurde die Information hinsichtlich der relativen Position des UWB-fähigen mobilen Endgeräts am Körper des Benutzers beim Koppeln von Gerät und UWB-fähigem mobilen Endgerät dem Gerät, vorzugsweise seitens des UWB-fähigen mobilen Endgeräts, zur Verfügung gestellt. Dies kann eine Möglichkeit darstellen, wie diese Information seitens des Geräts erhalten werden kann.

Gemäß einem weiteren Aspekt der Erfindung ist das Gerät, vorzugsweise das UWB-Modul und bzw. oder die Steuerungseinheit des Geräts, ausgebildet und eingerichtet, in Abhängigkeit der Information hinsichtlich der relativen Position des UWB-fähigen mobilen Endgeräts am Körper des Benutzers aktiviert und bzw. oder betrieben zu werden. Dies kann die Nutzung der tatsächlichen Position bzw. Ortung des Benutzers relativ zum Gerät seitens des Geräts ermöglichen. Dies kann insbesondere nützlich sein, falls sich der Benutzer vor einem von mehreren erfindungsgemäßen Geräten befindet, das UWB-fähige mobile Endgerät jedoch so trägt, dass es auch einem anderen erfindungsgemäßen Gerät zugeordnet werden könnte.

Gemäß einem weiteren Aspekt der Erfindung ist das Gerät, vorzugsweise das UWB-Modul und bzw. oder eine Steuerungseinheit des Geräts, ausgebildet und eingerichtet, das UWB-fähige mobile Endgerät zu identifizieren. Mit anderen Worten kann das UWB-fähige mobile Endgerät, mit welchem seitens des Haushaltsgeräts gerade eine Kommunikation stattfindet, von anderen derartigen UWB-fähigen mobilen Endgerät unterschieden werden, beispielsweise durch Vergleich von Identifikationsdaten des UWB-fähigen mobilen Endgeräts mit Identifikationsdaten, welche dem Haushaltsgerät, beispielsweise dort gespeichert, zur Verfügung stehen oder, beispielsweise über das Internet, zur Verfügung gestellt werden können.

In jedem Fall kann das Haushaltsgerät gezielt auf das konkrete identifizierte UWB-fähige mobile Endgerät reagieren bzw. in Abhängigkeit des konkreten identifizierten UWB-fähigen mobilen Endgeräts betrieben werden, wie weiter unten noch näher beschrieben werden wird.

Gemäß einem weiteren Aspekt der Erfindung ist das Gerät, vorzugsweise eine Steuerungseinheit des Geräts, ausgebildet und eingerichtet, das identifizierte UWB-fähige mobile Endgeräts einem Benutzer zuzuordnen. Hierdurch kann eine Verknüpfung von identifiziertem UWB-fähigen mobilen Endgerät und dessen Träger als Benutzer erfolgen, beispielsweise ebenfalls durch Vergleich mit entsprechenden Informationen, wie zuvor beschrieben. Dies kann es ermöglichen, das Haushaltsgerät in Abhängigkeit eines konkreten identifizierten Benutzers zu betreiben, wie weiter unten noch näher beschrieben werden wird.

Mit anderen Worten kann ein Benutzer erfindungsgemäß mithilfe eines UWB-Wearables vom Haushaltsgerät detektiert werden, beispielswiese hinsichtlich Raumpräsenz und bzw. oder Annäherung. Jedoch erkennt das Haushaltsgerät nicht, um welche Art von UWB-Wearable es sich handelt und wo dieses UWB-Wearable vom Benutzer getragen wird, z. B. ob in der Hosentasche und in welcher, am Handgelenk und an welchem, in einer Hand und an welcher, im Kopfbereich oder im Halsbereich.

Steht der Benutzer beispielsweise vor drei nebeneinander eingebauten UWB-fähigen Haushaltsgeräten, kann dies eventuell dazu führen, dass der Benutzer sich etwas mehr links oder rechts vor dem Haushaltsgerät aufstellt, um dieses mit der rechten bzw. linken Hand zu bedienen. Somit kann es passieren, dass zwei benachbarte Haushaltsgeräte die Auswertung des Abstandes zum Benutzer fehlinterpretieren und beide Haushaltsgeräte eine Eingabe vom Benutzer erwarten oder eine Aktion durchführen, wie z. B. aus dem Standby in das Hauptmenü (Screenwechsel) gelangen.

Werden UWB-Wearables somit zur Nutzerortung und bzw. oder Geräteinteraktion genutzt, kann es zu einer Fehlinterpretation der Nutzerposition kommen. Dabei ist die Ausrichtung bzw. die Trageposition des UWB-Wearables relevant. Im ungünstigsten Fall ist ein Wearable näher am Nachbargerät positioniert, obwohl der Nutzer dieses aktuell nicht benutzt. Entsprechende Annäherungserkennungen der Nutzerinteraktion könnten hierbei eine Annäherung am falschen Gerät detektieren. Es kann somit durch mangelnde Links-/Rechtsortung zu einer Fehlinterpretation "Vor welchem Gerät befindet sich der Nutzer" kommen.

Erfindungsgemäß können somit zwei oder mehrere nebeneinander eingebaute bzw. aufgestellte Haushaltsgeräte mit UWB-Technologie verwendet werden. Des Weiteren werden UWB-Wearables benötigt, die von einem Nutzer am Körper getragen werden. Die UWB-Wearables können auf folgenderweise ausgeprägt sein:

### Bedienbare Wearables:

- Smartphone:
   Es gibt viele Smartphones, die zurzeit neben den Umgebungslicht-, Näherungs-,
   Beschleunigungs- und Rotationssensor, elektromagnetischer Sensor,
   Fingerabdruckscanner sowie Sensoren für die Standortbestimmung auch UWB-Technologie nutzen.

Die relative Position eines Smartphones ist in der linken oder rechten Hosentasche.
- Smart Glases:
   Eine Smart-Glases gibt es zurzeit meistens mit einer Kamera, GPS-Sensorik, wobei nicht auszuschließen ist, dass die UWB auch in diesem Wearable implementiert wird.

Die relative Trageposition ist im Kopfbereich, aber auch um den Hals hängend.
- Smart Watch:
   Die meisten der Smart Watches besitzen Sensoren wie Barometer, Beschleunigung-Sensor, Gyroskop-Sensor, GPS, optische Puls - Herzfrequenzmessung oder ein Pulsoximeter. Es werden jedoch aktuell auch diese Wearables mit UWB-Technologie ausgestattet.
   Die relative Trageposition einer Smart-Watch ist auf dem linken oder rechten Handgelenk.

### Nicht bedienbare Wearables:

- Smart Ring:
   Aktuell werden die Smart-Ringe mit Sensorik wie NFC, Beschleunigungssensor, Infrarot optischer Pulssensor, Gyroskop und Temperatursensor ausgestattet. Die Implementierung der UWB-Technologie ist an dieser Stelle ebenfalls möglich.
   Relative Trageposition eines Smart-Rings ist auf dem Ringfinger der linken oder rechten Hand.
- Smart Tag:
   Die Smart Tags werden aktuell schon mit der UWB-Technologie aufgebaut. Diese könnten als Ketten- oder Schlüsselanhänger oder auch als Armband mitgeführt werden.
   Hier ist die relative Trageposition Handgelenke, Halsbereich oder auch in der Hosentasche.

Damit ein UWB-Wearable und ein Haushaltsgerät miteinander interagieren können, können sie initial gekoppelt werden. Beim Koppeln zwischen einem Haushaltsgerät und einem UWB-Wearable können Daten aus dem UWB-Wearable ausgelesen werden, die sich auf dem UWB-Wearable lokal oder auch auf einer Cloud befinden könnten.

Idealerweise können in diesen Daten der Trageort des UWB-Wearables, die Zuordnung, ob der Nutzer Rechts- oder Linkshänder (bei Smartwatch und Smartring) ist, und bzw. oder die Größe des Nutzers hinterlegt sein. Die Nutzerprofile können beispielsweise beim Koppeln zwischen einem UWB-Wearable und dem Haushaltgerät erzeugt werden. Sie können lokal in einer Datenbank auf dem Haushaltsgerät hinterlegt werden. Alternativ kann das Haushaltgerät die Userdaten auch von einer Cloud oder auch als Liveparameter abfragen, da die Wearables einem Nutzer zugeordnet sind.

Das System kann vorzugsweise auch in der Lage sein, auch Bewegungsmuster des Nutzers nachzuvollziehen und auch andere Parameter der UWB-Wearables in Betracht zu ziehen, um das System auch lernfähig zu gestalten. Z. B. sollte der Näherungssensor (Kamera, IR-Sensor) eines Smartphones keinen plausiblen oder geringen Wert liefern, kann es sein, dass dieses sich höchstwahrscheinlich in der Hosentasche und nicht in der Hand befindet (Smartphone).

Sollte es weiterhin zu einer Fehlinterpretation vom Haushaltsgerät kommen, weil die Sensordaten von den UWB-Wearables nicht genug Informationen liefern, ob der Nutzer Links- oder Rechtshänder ist, kann der Nutzer durch eine Kalibrierung das System auf seinen Gebrauch anlernen. Somit werden die Trageorte des Nutzers einkalibriert. Z. B. stellt sich der Nutzer mit dem UWB-Wearable in einer Position hin, aus welcher er ein Haushaltsgerät nutzen möchte. Anschließende führt er eine Kalibrierung des Abstandes zum Haushaltsgerät durch. Die Kalibrierungsoption kann in den Geräteoptionen hinterlegt sein und nur dann erfolgen, falls ein UWB-Wearable mit dem Haushaltsgerät verbunden wurde. Die "Relative Trageposition des UWB-Wearables" ist als optimale Kalibrierung anzusehen.

Eine Kalibrierung kann auch auf verschiedene Positionen erfolgen. Z. B. kann sich ein Smartphone beim Bedienabstand zum Haushaltsgerät auch in der Hosentasche befinden oder auch in der passiven Bedienhand.

Durch die hinterlegten Nutzerdaten lässt sich erfindungsgemäß genauer identifizieren, vor welchem Haushaltsgerät der Nutzer steht, um dieses zu bedienen. Eine Interaktion zwischen Nutzer und Haushaltsgerät kann genauer erfolgen.

Z. B. steht ein Nutzer in einer Küchenumgebung, wo sich drei nebeneinander eingebaute Geräte befinden, links ein Dampfgarer, mittig ein Kaffeevollautomat, rechts ein Backofen. Der Nutzer möchte lediglich eine Interaktion am Kaffeevollautomaten durchführen.

Da das Gerät die Raumpräzens und bzw. oder die Annäherung des Nutzers durch die UWB-Technologie erkannt hat, wurden im Hintergrund alle Maßnahmen getroffen, um eine Kaffeespezialität auszugeben. Durch den Bedienabstand zwischen Nutzer und Gerät wurde detektiert, dass der Kaffeebezug erfolgen kann. Dies wird auf dem Display des Kaffeevollautomaten angezeigt. Wobei der Nutzer eine Bestätigung geben kann, indem er eine Tasse unter dem Auslauf stellt und den Bezug auf dem Display startet.

Die benachbarten Geräte werden keine Interaktion mit dem Nutzer erwarten, da der relative Bedienabstand zu den Geräten außerhalb der Range ist. Durch den relativen Abstand zwischen den Wearables und den Haushaltsgeräten wird sichergestellt, dass auch Personen, die körperlich zwei benachbarten Haushaltsgeräte erfassen, von den Haushaltsgeräten unterschieden werden können.

Mit anderen Worten kann zusätzlich oder alternativ von der Situation ausgegangen werden, dass Serviceroboter in Zukunft immer mehr Aufgaben im Arbeits- und Privatleben erfüllen werden. Eine einfache Aufgabe kann das Bringen von Gegenständen sein. Hier kann man zum Beispiel das Bringen eines Wasserglases anführen. Ist die Person, die das Glas erhalten soll, körperlich nicht mehr so tüchtig, ist es für die Person angenehm, das Glas in der dominanten Hand zu erhalten. D. h. ein Rechtshänder bekommt das Glas in die rechte Hand angereicht.

Nun gibt es aber zwei Herausforderungen. Zum einen ist dem Serviceroboter die Händigkeit der Person nicht bekannt. Zum anderen muss der Serviceroboter auch die Person korrekt finden und erreichen können.

Auch ist zu bedenken, dass viele Dinge unseres täglichen Lebens ergonomisch für Rechtshänder optimiert sind. So sind Griffe wie von Scheren oder Werkzeugen für Rechtshänder geformt, aber auch Bedienoberflächen für die rechte Hand intuitiver angeordnet. Benutzt nun aber ein Linkshänder oder gar ein Einarmiger das Gerät, wäre eine Umformung der Griffe oder die Neuanordnung der Bedienoberfläche vorteilhaft.

Nachteilig ist in beiden Fällen, dass aktuelle Geräte nicht über die Möglichkeit verfügen, die Bedienhand einer Person als Benutzer zu erkennen. Somit können die beiden zuvor genannten Probleme nicht individuell optimiert, sondern nur eine "Durchschnittslösung" gewählt werden.

Somit wäre es auch wünschenswert, die Nutzung- und bzw. oder Bedienergonomie beim Umgang mit Bedienoberflächen von Haushaltsgeräten und bzw. oder mit Servicerobotern zu verbessern.

Für die Lösung beider Probleme können verschiedene Bausteine verwendet werden. Zunächst kann die Bedienhand des Benutzers sicher erkannt werden. Danach kann bei Nutzung der Benutzer wiedererkannt werden, damit die Nutzung auf die Bedienhand optimiert bzw. angepasst werden kann.

Für beide Anwendungsfälle bestehen jedoch verschiedene Möglichkeiten für die Handerkennung und erneuten Identifikation zur Verfügung. Für beide Bausteine ist die UWB-Technologie ausschlaggebend. Es wird bewusst die Bedienhand aufgeführt und nicht die dominante Hand. Insbesondere im Küchenkontext kann nämlich aufgrund der Küchenanordnung die primäre Bedienhand nicht immer auch zwangsläufig die dominante Hand sein.

### Handerkennung für Serviceroboter

Serviceroboter und Nutzer haben keinen festen räumlichen Bezug, da beide nicht ortsfest sind. Daher ist eine Handerkennung nicht einfach möglich.

Der Serviceroboter kann die Händigkeit a priori erfahren, indem die Information nicht von ihm selbst erkannt wird, sondern von einem Nutzer in eine Datenbank (Cloud oder lokal auf Serviceroboter) hinterlegt wird. In dieser Datenbank wird eine Verknüpfung von primärer Bedienhand und Nutzer-ID hinterlegt. Bei der Nutzer-ID handelt es sich nicht um einen zusätzlichen Tag, sondern insbesondere um ein UWB-Modul, das in einem mobilen Endgerät wie in einer Smartwatch, in einem Notfallarmband, in einem Smartphone, in einer AR-Brille oder in Kopfhörern verbaut ist.

Neben dem a-priori-Wissen kann man die primäre Hand auch a-posteriori-ermitteln. So fährt der Roboter die Person mal von links und mal von rechts an. Nun schaut der Roboter, ob die Person die Gegenstände vermehrt mit der linken Hand oder vermehrt mit der rechten Hand annimmt. Nach einer gewissen Zeit überwiegt ein Verhalten, sodass diese Hand in der Datenbank als primäre Bedienhand hinterlegt werden kann.

Hier kann eine erneute Identifikation des Benutzers dadurch erfolgen, dass bei Aufträgen wie "Wasser holen" die ID des UWB-Chips hinterlegt oder verknüpft wird. Wird sich nun der Person angenähert, kann über das UWB-Modul die Person cm-genau geortet werden. Über Winkelmessungen können gegebenenfalls auch die Pose von Person und Roboter korrekt in Bezug gesetzt werden, sodass eine Bedienung zur dominanten Hand oder primären Bedienhand möglich ist.

### Handerkennung für verbesserte Bedienergonomie

Bei dieser Handerkennung ist in der Regel das Gerät (z. B. Hausgerät) ortsfest. Somit kann ein fester Nutzungskontext erstellt werden. Es sind vorwiegend Haushaltsgeräte wie Backöfen gemeint, bei denen ein Display ortsfest positioniert ist.

Die Handerkennung kann, wie zuvor beschrieben, a priori in einer Datenbank hinterlegt werden.

Die bedienende Hand kann erlernt werden, indem die Position des Nutzers bei Bedienung des Geräts ermittelt wird.

Der Nutzer kann ein mobiles Endgerät (Smartphone, Smartwatch, AR-Brille, Kopfhörer und dergleichen) mit einem UWB-Modul bei sich tragen. Das UWB-Modul des Haushaltsgeräts kann nun über eine Winkelmessung bestimmen, wo sich der Nutzer befindet. Hierfür benötigt das Hausgerät ein entsprechendes UWB-Modul, das mindestens zwei Antennen je relevanter Raumrichtung besitzt und diese vom HF-Frontend auch zur Winkelschätzung nutzen kann. Der Nutzer steht selten mittig vor dem Gerät, sondern meistens leicht versetzt. Über die Winkelmessung kann nun erkannt werden, ob der Nutzer das Gerät mit rechts oder mit links bedient. Da die Seite je nach Annäherung vermutlich nicht immer gleich ist, wird diese Messung mehrfach und bei mehreren Interaktionen durchgeführt und aus dieser Historie dann die Bedienhand ermittelt.

Nun kann es beim Gerätedesign vorkommen, dass das UWB-Modul nicht mittig über der Bedieneinheit montiert wird. Um dies auszugleichen, kann nun eine komplexere Lokalisierung durchgeführt werden. Und zwar kann der 3D-Bezug durch Abstand-, Azimut- und Elevationsmessung (1 Abstand, 2 Winkel) ermittelt werden. Über die drei Werte kann ein transformierter Wert ermittelt werden, als sei aus dem Zentrum der Bedieneinheit gemessen worden.

Des Weiteren werden viele mobile Endgeräte wie insbesondere Smartwatches nicht mittig am Körper des Benutzers getragen. Um hier eine korrekte Annahme zu treffen, wird die Information, an welchem Arm die Smartwatch getragen wird, ebenfalls für die Entscheidung, wie der Nutzer zum Gerät steht, herangezogen.

Bei einer Smartwatch ergeben sich noch neue Möglichkeiten, zu erkennen, welche Hand gerade aktiv ist. Da die Smartwatch in der Regel am Handgelenk getragen wird, kann direkt durch Ermittlung des Abstands von Bedieneinheit und Smartwatch ermittelt werden, ob die Uhrhand auch die Bedienhand ist, ohne dass eine Winkelmessung erfolgen muss. Nun muss jedoch bekannt sein, an welchem Arm die Uhr getragen wird. Hierzu kann entweder diese Information von der Smartwatch abgefragt oder aber es kann über sonstige Möglichkeiten (z. B. Kamera) erkannt werden, an welcher Hand die Uhr getragen wird.

In diesem Fall kann eine Annäherung eines UWB-Teilnehmers an das Gerät festgestellt werden, wodurch Abstand und ID ermittelt werden können. Hierbei kann ein erstes Discovery auch über andere Kommunikationsprotokolle (z. B. BLE) von statten gehen. Ist der UWB-Teilnehmer der Hauptnutzer und bzw. oder hat die geringste Entfernung zum Gerät, werden bei Annäherung ans Gerät die Bedienelemente in einer für ihn angepassten Anordnung dargestellt, sprich Bestätigungsknöpfe werden unten links statt rechts für einen Linkshänder angezeigt. Die verbesserte Bedienergonomie kann neben Anzeigeeinheiten auch weitere Vorlieben wie Sprache umfassen.

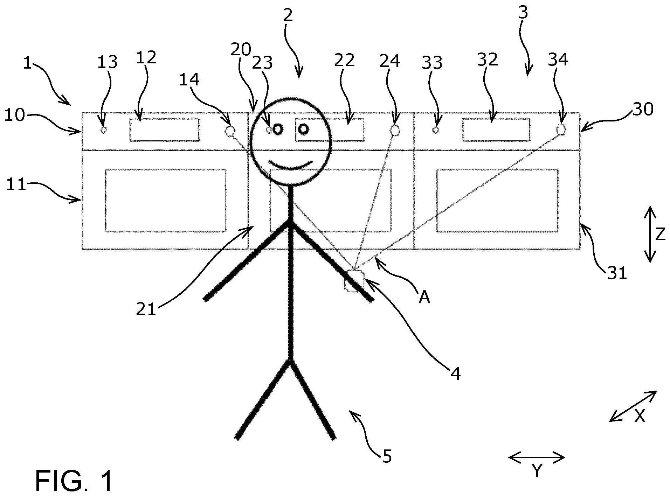

Ein Ausführungsbeispiel der Erfindung ist in der Zeichnung rein schematisch dargestellt und wird nachfolgend näher beschrieben. Es zeigt
- Figur 1: eine perspektivische Ansicht einer Küche von schräg oben vorne mit drei unmittelbar benachbart angeordneten erfindungsgemäßen Geräten in Form von Haushaltsgeräten sowie einen Benutzer.

Die o.g. Figur wird in kartesischen Koordinaten betrachtet. Es erstreckt sich eine Längsachse X, welche auch als Tiefe X oder als Länge X bezeichnet werden kann. Senkrecht zur Längsachse X erstreckt sich eine Querachse Y, welche auch als Breite Y bezeichnet werden kann. Senkrecht sowohl zur Längsachse X als auch zur Querachse Y erstreckt sich eine vertikale Achse Z, welche auch als Höhe Z bezeichnet werden kann und der Richtung der Schwerkraft entspricht. Die Längsachse X und die Querachse Y bilden gemeinsam die Horizontale X, Y, welche auch als horizontale Ebene X, Y bezeichnet werden kann.

Die Figur 1 zeigt eine perspektivische Ansicht einer Küche (nicht bezeichnet) von schräg oben vorne mit drei unmittelbar benachbart angeordneten erfindungsgemäßen Geräten 1, 2, 3 in Form von Haushaltsgeräten 1, 2, 3 sowie einen Benutzer 5. Das erste erfindungsgemäße Haushaltsgerät 1 ist ein Dampfgarer 1. Das zweite erfindungsgemäße Haushaltsgerät 2 rechts daneben ist ein Kaffeevollautomat 2. Das dritte erfindungsgemäße Haushaltsgerät 3 rechts daneben ist ein Backofen 3. Vor den Haushaltsgeräten 1, 2, 3 steht der Benutzer 5, welche am linken Handgelenk ein UWB-fähiges mobiles Endgerät 4 in Form eines UWB-Wearable 4 als UWB-Smartwatch 4 trägt.

Alle drei erfindungsgemäßen Haushaltgeräte 1, 2, 3 weisen jeweils ein Außengehäuse (nicht bezeichnet) auf, welches auch als äußeres Gehäuse bezeichnet werden kann und das jeweilige Haushaltgerät 1, 2, 3 im Wesentlichen nach außen abschließt bzw. umschließt. Das Außengehäuse schließt jeweils entlang der Längsachse nach vorne, d.h. zur Küche hin, im oberen Bereich mit einer Blende 10, 20, 30 ab. Die Blende 10, 20, 30 weist jeweils eine Anzeige-/Bedieneinheit 12, 22, 32 in Form eines Displays 12, 22, 32 auf.

Innerhalb des Außengehäuses ist ein Garraum bzw. ein Zubereitungsbereich (nicht dargestellt) vorhanden, welcher entlang der Längsachse X für den Benutzer 5 von vorne durch eine Zugangsöffnung (nicht dargestellt) hindurch, welche sich unterhalb der Blende 10, 20, 30 befindet, zugänglich ist. Die Zugangsöffnung kann jeweils mittels eines Verschlusselements 11, 21, 31 in Form einer Klappe 11, 21, 31 geschlossen und geöffnet werden.

Im rechten Bereich der Blende 10, 20, 30 ist jeweils eine Bilderfassungseinheit 13, 23, 33 angeordnet und mit ihrem jeweiligen Detektionsbereich bzw. Bilderfassungsbereich (nicht dargestellt) nach vorne in die Küche gerichtet, um jeweils den Bereich unmittelbar vor dem Haushaltgerät 1, 2, 3 zu erfassen. Die Bilderfassungseinheiten 13, 23, 33 können jeweils als Time-of-Flight-Kamera 13, 23, 33 oder als hochauflösende Kamera 13, 23, 33 ausgebildet sein. Jedes Haushaltgerät 1, 2, 3 weist ferner ein UWB-Modul 14, 24, 34 auf, um in beide Übertragungsrichtungen mittels einer UWB-Kommunikationsverbindung A mit UWB-fähigen mobilen Endgeräten 4 kommunizieren zu können. Jedes Haushaltgerät 1, 2, 3 weist des Weiteren eine Steuerungseinheit (nicht dargestellt) zum Betrieb der jeweiligen Komponenten und Module auf.

Allgemein kann die UWB-Kommunikation zwischen dem jeweiligen Haushaltgerät 1, 2, 3 und einem UWB-fähigen mobilen Endgerät 4 eines Benutzers 5 verwendet werden, um das UWB-fähige mobile Endgerät 4 zu identifizieren und einem Benutzer 5 zuzuordnen, wodurch auch der Benutzer 5 identifiziert werden kann. Auch kann das UWB-fähige mobile Endgerät 4 und damit zumindest grob der Benutzer 5 vom jeweiligen Haushaltgerät 1, 2, 3 geortet werden, was eine Bestimmung einer Orientierung sowie eines Abstands zwischen dem jeweiligen Haushaltgerät 1, 2, 3 und dem UWB-fähigen mobilen Endgerät 4 ermöglicht.

Um dabei den Benutzer 5, welcher das UWB-fähige mobile Endgerät 4 nahezu beliebig irgendwo am Körper tragen kann, genauer zu orten, kann jedes Haushaltsgerät 1, 2, 3 bzw. dessen UWB-Modul 14, 24, 34 und bzw. oder Steuerungseinheit eine Information hinsichtlich der relativen Position des UWB-fähigen mobilen Endgeräts 4 bzw. der Smartwatch 4 am Körper des Benutzers 5 aufweisen, so dass sein UWB-fähiges mobiles Endgerät 4 einer genaueren Position am Körper des Benutzers 5 bzw. der Benutzer 5 genau einer tatsächlichen Position zugeordnet werden kann.

Die Information hinsichtlich der relativen Position des UWB-fähigen mobilen Endgeräts 4 am Körper des Benutzers 5 kann die Art des UWB-fähigen mobilen Endgeräts 4 wie beispielsweise eine Smartwatch 4, der Trageort des UWB-fähigen mobilen Endgeräts 4 am Körper des Benutzers 5 wie beispielsweise eines der Handgelenke des Benutzers 5 und bzw. oder die Händigkeit des Benutzers 5 wie beispielsweise Rechtshänder sein. Hierdurch könnte die Smartwatch 4 im betrachteten Beispiel der Figur 1 dem linken Handgelenk des Benutzers 5 zugeordnet werden. Entsprechend kann der Benutzer 5 relativ zu dieser Position zuordnet bzw. geortet werden, was insbesondere die Unterscheidung ermöglichen kann, vor welchem der drei Haushaltsgeräte 1, 2, 3 der Benutzer 5 tatsächlich steht.

Die Information der Händigkeit des Benutzers 5 kann auch dazu verwendet werden, ein Bedienelement der Anzeige-/Bedieneinheit 12, 22, 32 in Abhängigkeit der Händigkeit des Benutzers 5 an einer von zwei Positionen der Anzeige-/Bedieneinheit 12, 22, 32 anzuzeigen.

Die Information hinsichtlich der relativen Position des UWB-fähigen mobilen Endgeräts 4 am Körper des Benutzers 5 kann auch die Körpergröße des Benutzers 5 sein, was im Falle von Smart Glasses 4 als UWB-fähiges mobiles Endgerät 4 nützlich sein kann.

Der Benutzer 5 kann die Information hinsichtlich der relativen Position des UWB-fähigen mobilen Endgeräts 4 an seinem Körper auch anlernen bzw. kalibrieren, indem der Benutzer 5 eines der Haushaltsgerät 1, 2, 3 benutzt, dabei seine Smartwatch 4 trägt und vom Haushaltsgerät 1, 2, 3 hierbei die relative Position bestimmt und gespeichert wird.

In jedem Fall kann die Information hinsichtlich der relativen Position des UWB-fähigen mobilen Endgeräts 4 am Körper des Benutzers 5 beim Koppeln des Haushaltsgeräts 1, 2, 3 und dem UWB-fähigen mobilen Endgerät 4 seitens des UWB-fähigen mobilen Endgeräts 4 zur Verfügung gestellt werden.

Es kann auch die bereits erwähnte Bilderfassungseinheit 13, 23, 33 verwendet werden, um die Smartwatch 4 am linken Handgelenk des Benutzers 5 zu erkennen und hierdurch zur Information hinsichtlich der relativen Position des UWB-fähigen mobilen Endgeräts 4 am Körper des Benutzers 5 zu gelangen.

In jedem Fall kann ein Aktivieren und bzw. oder Betreiben des Haushaltsgeräts 1, 2, 3, welches der Benutzer 5 verwenden möchte, in Abhängigkeit der Information hinsichtlich der relativen Position des UWB-fähigen mobilen Endgeräts 4 am Körper des Benutzers 5 erfolgen.

### Bezugszeichenliste (Bestandteil der Beschreibung)

- A: UWB-Kommunikationsverbindung

- X: Längsachse; Tiefe; Länge
- Y: Querachse; Breite
- Z: vertikale Achse; Höhe
- X, Y: Horizontale; horizontale Ebene

- 1: (erstes) Gerät bzw. Haushaltsgerät; Dampfgarer
- 10: Blende
- 11: Verschlusselement; Klappe
- 12: Anzeige-/Bedieneinheit; Display
- 13: Bilderfassungseinheit; Time-of-Flight-Kamera; hochauflösende Kamera
- 14: UWB-Modul

- 2: (zweites) Gerät bzw. Haushaltsgerät; Kaffeevollautomat
- 20: Blende
- 21: Verschlusselement; Klappe
- 22: Anzeige-/Bedieneinheit; Display
- 23: Bilderfassungseinheit; Time-of-Flight-Kamera; hochauflösende Kamera
- 24: UWB-Modul

- 3: (drittes) Gerät bzw. Haushaltsgerät; Backofen
- 30: Blende
- 31: Verschlusselement; Klappe
- 32: Anzeige-/Bedieneinheit; Display
- 33: Bilderfassungseinheit; Time-of-Flight-Kamera; hochauflösende Kamera
- 34: UWB-Modul

- 4: UWB-fähiges mobiles Endgerät; UWB-Wearable; UWB-Smartwatch

- 5: Person; Benutzer

## Patentansprüche

1. Gerät (1; 2; 3), vorzugsweise Haushaltsgerät (1; 2; 3),
**gekennzeichnet durch**
ein UWB-Modul (14; 24; 34), welches ausgebildet und eingerichtet ist, eine zumindest einseitige, vorzugsweise beidseitige, UWB-Kommunikation mit einem UWB-fähigen mobilen Endgerät (4) eines Benutzers (5) auszuführen,
wobei das Gerät (1; 2; 3), vorzugsweise das UWB-Modul (14; 24; 34) und/oder eine Steuerungseinheit des Geräts (1; 2; 3), ferner ausgebildet und eingerichtet ist, das UWB-fähige mobile Endgerät (4) zu orten,
wobei das Gerät (1; 2; 3), vorzugsweise das UWB-Modul (14; 24; 34) und/oder die Steuerungseinheit des Geräts (1; 2; 3), eine Information hinsichtlich der relativen Position des UWB-fähigen mobilen Endgeräts (4) am Körper des Benutzers (5) aufweist.

2. Gerät (1; 2; 3) nach Anspruch 1,
wobei die Information hinsichtlich der relativen Position des UWB-fähigen mobilen Endgeräts (4) am Körper des Benutzers (5) die Art des UWB-fähigen mobilen Endgeräts (4) ist.

3. Gerät (1; 2; 3) nach Anspruch 1 oder 2,
wobei die Information hinsichtlich der relativen Position des UWB-fähigen mobilen Endgeräts (4) am Körper des Benutzers (5) der Trageort des UWB-fähigen mobilen Endgeräts (4) am Körper des Benutzers (5) ist.

4. Gerät (1; 2; 3) nach einem der vorangehenden Ansprüche,
wobei die Information hinsichtlich der relativen Position des UWB-fähigen mobilen Endgeräts (4) am Körper des Benutzers (5) die Händigkeit des Benutzers (5) ist.

5. Gerät (1; 2; 3) nach Anspruch 4,
ferner mit wenigstens einer Bedieneinheit (12; 22; 32), welche ausgebildet ist, wenigstens ein Bedienelement an wenigstens zwei unterschiedlichen Positionen anzuzeigen,
wobei das Gerät (1; 2; 3), vorzugsweise die Bedieneinheit (12; 22; 32) und/oder die Steuerungseinheit des Geräts (1; 2; 3), ausgebildet und eingerichtet ist, das Bedienelement in Abhängigkeit der Händigkeit des Benutzers (5) an einer der beiden Positionen anzuzeigen.

6. Gerät (1; 2; 3) nach einem der vorangehenden Ansprüche,
wobei die Information hinsichtlich der relativen Position des UWB-fähigen mobilen Endgeräts (4) am Körper des Benutzers (5) die Körpergröße des Benutzers (5) ist.

7. Gerät (1; 2; 3) nach einem der vorangehenden Ansprüche,
wobei die Information hinsichtlich der relativen Position des UWB-fähigen mobilen Endgeräts (4) am Körper des Benutzers (5) eine kalibrierte relative Position des Benutzers (5) ist.

8. Gerät (1; 2; 3) nach einem der vorangehenden Ansprüche
mit einer Bilderfassungseinheit (13; 23; 33), welche ausgebildet und eingerichtet ist, einen Detektionsbereich vor dem Gerät (1; 2; 3) sensorisch zu erfassen,
wobei das Gerät (1; 2; 3), vorzugsweise die Bilderfassungseinheit (13; 23; 33) und/oder die Steuerungseinheit des Geräts (1; 2; 3), ausgebildet und eingerichtet ist, die relative Position des UWB-fähigen mobilen Endgeräts (4) am Körper des Benutzers (5) zu erkennen und als Information hinsichtlich der relativen Position des UWB-fähigen mobilen Endgeräts (4) am Körper des Benutzers (5) zu verwenden und/oder zu speichern.

9. Gerät (1; 2; 3) nach einem der vorangehenden Ansprüche,
wobei die Information hinsichtlich der relativen Position des UWB-fähigen mobilen Endgeräts (4) am Körper des Benutzers (5) beim Koppeln von Gerät (1; 2; 3) und UWB-fähigem mobilen Endgerät (4) dem Gerät (1; 2; 3), vorzugsweise seitens des UWB-fähigen mobilen Endgeräts (4), zur Verfügung gestellt wurde.

10. Gerät (1; 2; 3) nach einem der vorangehenden Ansprüche,
wobei das Gerät (1; 2; 3), vorzugsweise das UWB-Modul (14; 24; 34) und/oder die Steuerungseinheit des Geräts (1; 2; 3), ausgebildet und eingerichtet ist, in Abhängigkeit der Information hinsichtlich der relativen Position des UWB-fähigen mobilen Endgeräts (4) am Körper des Benutzers (5) aktiviert und/oder betrieben zu werden.

11. Gerät (1; 2; 3) nach einem der vorangehenden Ansprüche,
wobei das Gerät (1; 2; 3), vorzugsweise das UWB-Modul (14; 24; 34) und/oder eine Steuerungseinheit des Geräts (1; 2; 3), ausgebildet und eingerichtet ist, das UWB-fähige mobile Endgerät (4) zu identifizieren.

12. Gerät (1; 2; 3) nach Anspruch 11,
wobei das Gerät (1; 2; 3), vorzugsweise eine Steuerungseinheit des Geräts (1; 2; 3), ausgebildet und eingerichtet ist, das identifizierte UWB-fähige mobile Endgeräts (4) einem Benutzer (5) zuzuordnen.
